# EUROPÄISCHE PATENTSCHRIFT

(11) **EP 2 731 092 B1**
(45) Veröffentlichungstag und Bekanntmachung des Hinweises auf die Patenterteilung: **06.04.2016**
(21) Anmeldenummer: 13188196.3
(22) Anmeldetag: 10.10.2013
(51) Int. Cl.: G09F 21/04

(54) **Werbeträger für Kraftfahrzeuge und Verwendungsverfahren**
Advertising medium for motor vehicles and application method
Support publicitaire pour véhicules automobiles et procédé d'utilisation

(30) Priorität: 10.11.2012 DE 202012104331 U
(43) Veröffentlichungstag der Anmeldung: 14.05.2014
(73) Patentinhaber: Clever & Schink GmbH, 79102 Freiburg (DE)
(72) Erfinder: Clever, Sven, 79288 Gottenheim (DE)
(74) Vertreter: Tahhan, Nader Isam Mark

(56) Entgegenhaltungen:
- CH-A5- 588 368
- DE-U1- 9 109 015
- DE-U1-202008 012 436
- FR-A1- 2 871 105

## Beschreibung

### Einleitung

Die Erfindung betrifft das Gebiet von an Kraftfahrzeug anbringbaren Werbeträgern. Insbesondere betrifft die Erfindung das Gebiet solcher Werbeträger, welche am Scheibenwischer von Kraftfahrzeugen anbringbar sind.

### Stand der Technik und Nachteile

Kraftfahrzeuge als Träger von Werbung sind seit Langem bekannt. Die Werbung wird dabei zumeist in Form von Aufklebern auf Außenflächen wie Türen oder Dach geklebt, oder in direkt auflackiert. Nachteilig an dieser Art von Werbemitteln ist jedoch, dass sie nur schwer oder überhaupt nicht vom Fahrzeug entfernbar sind.

Dieses Problem besteht jedoch nicht bei Werbeträgern, welche auf einfache Weise vom Fahrzeug entfernbar sind. Beispiele hierfür sind magnetische Schilder oder mit Saugnäpfen an die Innenseiten von Scheiben anbringbare, halbtransparente Schirme.

Bekannt sind auch an Scheibenwischern von Kraftfahrzeugen anbringbare Vorrichtungen, welche zwar primär dem Schutz des Scheibenwischers für Witterungseinflüssen bei längerer Nichtbenutzung des Fahrzeugs dienen, jedoch auch eine Werbefunktion haben können. So offenbart beispielsweise die Druckschrift DE 20 2008 012 436 U1 einen Scheibenwischerschutz, der durch seine Form vollständig den Scheibenwischer einschließt, wobei er am vorderen Ende und längsseits vernäht und am hinteren Ende offen ist, so dass er über Wischerblatt und Wischerarm gezogen werden kann. Auch die deutsche Gebrauchsmusterschrift G 91 09 015.6 zeigt ein einseitig offenes Zubehörteil für Kraftfahrzeuge, welches wiederum dem Schutz des Scheibenwischers und insbesondere des Wischerblattes dienen soll, indem es auf die Scheibenwischerblätter aufziehbar ist.

Alle diese Lösungen weisen jedoch den gemeinsamen Nachteil auf, statisch am Fahrzeug angebracht zu sein. Ein deutlich gesteigerter Aufmerksamkeitseffekt ergibt sich hingegen, wenn sich die Werbeträger selber relativ zum Fahrzeug in Bewegung befinden. Besonders effektiv ist hierbei eine intermittierende Bewegung, wie sie typischerweise von Scheibenwischern ausgeführt wird. Daher wurden bereits einige Lösungen vorgeschlagen, um den Scheibenwischer, insbesondere den Heckscheibenwischer, als Träger für Werbemittel zu nutzen.

In der Gebrauchsmusterschrift DE 29921044 U1 wird ein flächiger Werbeträger beschrieben, der vorzugsweise die Form einer winkenden Hand hat. Dieser weist an seiner Rückseite Befestigungsmittel in Form von Haken und Gummiringen auf, mit welchen der Werbeträger am Wischerarm kraftschlüssig festspannbar ist. Nachteilig an dieser Lösung ist der im Verhältnis zum Wert des eigentlichen Werbeträgers (der Hand) hohe Kostenanteil, den die Befestigung verursacht. Zudem können Gummiringe einer Ermüdung unterliegen und im Extremfall zu einem Verlust des Werbeträgers während der Fahrt führen, womit entsprechende Gefahren verbunden sind.

US-Patent 5,715,620 beschreibt einen am Scheibenwischer anbringbaren Werbeträger, der mittels eines Klammermechanismus am Wischerarm befestigbar ist. Auch hier ist der verhältnismäßig komplexe und aus mehreren Teile bestehende Befestigungsmechanismus nachteilig. Zudem besteht die Gefahr, dass der Klammermechanismus nicht für alle am Markt erhältlichen Querschnitte von Wischerarmen gleichermaßen geeignet ist, was wiederum mit der Gefahr des Verlierens des Werbemittels einhergeht.

Eine vergleichbare Lösung ist in der Druckschrift US 5,933,991 vorgeschlagen, wobei hier eine verhältnismäßig einfache Art der Befestigung gezeigt ist, welche jedoch ebenfalls die Gefahr des Verlierens des Werbeträgers aufweist.

In der Offenlegungsschrift DE 4313588 A1 wird ein Werbemittel zur Anbringung an Scheibenwischern gezeigt, welches ein Befestigungselement aufweist, das über die Rückseite des Werbeträgers hinaussteht und nach Art einer Schlaufe um den Wischerarm gelegt werde kann, um schließlich, vergleichbar mit einem breiten Kabelbinder, an der Rückseite des Werbeträgers befestigt zu werden. Auch diese Lösung benötigt ein speziell für die Aufgabe der Befestigung vorgesehenes Mittel und weist ebenfalls die Gefahr des unbeabsichtigten Ablösens des Werbeträgers auf.

Im Gebrauchsmuster DE 201 14 503 U1, welches sich ebenfalls mit einem Werbeträger für Scheibenwischer beschäftigt, nennt der einzige Anspruch eine Reihe von Befestigungsmöglichkeiten, die jedoch in der Beschreibung nicht aufgegriffen werden.

In der Druckschrift DE 29607890 U1 schließlich wird ein Werbeträger für Wischerarme beschrieben, der ausweislich der Figuren mit Hilfe eines Klemmstücks am Wischerarm befestigbar ist. Auch diese Lösung krankt an den vorstehend beschriebenen Nachteilen.

Das Dokument FR 2 871 105 A ist als nächstliegender Stand der Technik gegenüber dem Gegenstand des Anspruch 1 angesehen.

### Aufgabe der Erfindung und Lösung

Aufgabe der Erfindung ist demnach die Bereitstellung eines Werbeträgers für Scheibenwischer, (Front- und/oder Heckscheibenwischer), der die Nachteile des Standes der Technik vermeidet. Insbesondere soll der Werbeträger leicht am Scheibenwischerarm anbringbar und ebenso leicht entfernbar sein. Er soll höchste Sicherheit gegen Verlieren bieten und zu geringen Kosten herstellbar sein. Außerdem soll er universell einsetzbar, d.h. von- der genauen Geometrie des Scheibenwischerarms unabhängig sein.

Die Aufgabe wird durch einen Werbeträger gemäß Anspruch 1 sowie ein Verfahren zur Verwendung eines solchen Werbeträgers nach Anspruch 10 gelöst. Vorteilhafte Ausführungsformen sind den Unteransprüchen, der Beschreibung sowie den Figuren zu entnehmen.

### Beschreibung

Nachfolgend wird zunächst der erfindungsgemäße Werbeträger mit einigen bevorzugten Ausführungsformen detailliert beschrieben, wobei auf die entsprechenden Figuren verwiesen wird. Hierbei zeigt:
- **Figur 1**: einen erfindungsgemäßen Werbeträger in perspektivischer Ansicht;
- **Figur 2**: die Vorderseite eines erfindungsgemäßen Werbeträgers;
- **Figur 3**: die Rückseite dazu;
- **Figur 4**: einen aus den in Fig. 2 und Fig. 3 gezeigten Komponenten bestehenden Zusammenbau des Werbeträgers in einer Draufsicht;
- **Figur 5**: eine Draufsicht auf eine bevorzugte Ausführungsform des erfindungsgemäßen Werbeträgers;
- **Figur 6**: eine Seitenansicht eines Werbeträgers, der auf einem Scheibenwischerarm angebracht ist;
- **Figur 7**: eine perspektivische Ansicht des Werbeträgers aus Fig. 6.

Bezugszeichen, die bereits zuvor erläutert worden sind, wurden zur Vereinfachung in nachfolgenden Figuren teilweise weggelassen.

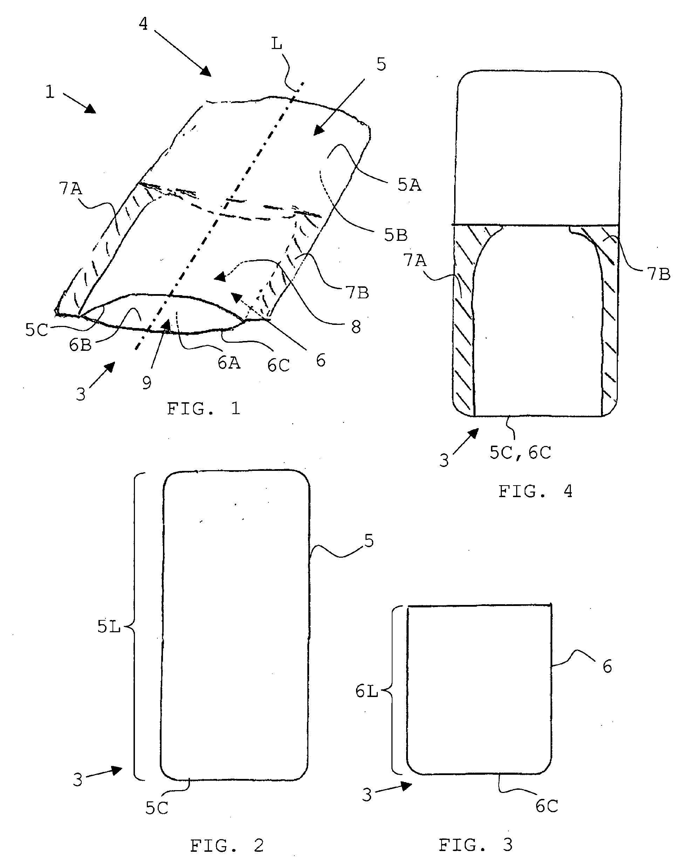

Die **Fig. 1** zeigt einen erfindungsgemäßen Werbeträger in einer Draufsicht. Der Werbeträger 1, der zur Befestigung an einem, zu einem Front- und/oder Heckscheibenwischer gehörenden Scheibenwischerarm (nicht gezeigt) für Kraftfahrzeuge vorgesehen ist, an dem er auch während dessen Betriebs verbleibt, umfasst ein proximales Ende 3 und ein distales Ende 4. "Proximal" bedeutet in Richtung eines Drehgelenks eines Scheibenwischerarms weisend, und mit "distal" wird das entgegengesetzte Ende bezeichnet, welches vom Drehgelenk weg weist.

Der Werbeträger 1 umfasst eine Vorderseite 5 mit einer als Werbefläche ausgestalteten oder ausgestaltbaren äußeren Vorderseite 5A und einer inneren Vorderseite 5B. Die äußere Vorderseite 5A ist demnach zur Präsentation der Werbebotschaft vorgesehen. Diese kann beispielsweise aufgedruckt, aufgeklebt, oder auch in das Material der äußeren Vorderseite 5A oder der Vorderseite 5 eingearbeitet sein. Die gegenüber liegende, im Betrieb nach hinten, also vom Betrachter weg und somit zur Scheibe bzw. zum Scheibenwischerarm (jeweils nicht gezeigt) hin weisende Seite der Vorderseite 5 ist wird vorliegend als innere Vorderseite 5B bezeichnet.

Als weitere Komponente umfasst der Werbeträger 1 eine Rückseite 6 mit einer äußeren Rückseite 6A und einer inneren Rückseite 6B. Die äußere Rückseite 6A bildet wiederum eine Außenseite des Werbeträgers 1, die innere Rückseite 6B weist zur Innenseite desselben.

Der erfindungsgemäße Webeträger 1 ist dadurch gekennzeichnet, dass Vorderseite 5 und Rückseite 6 flächig (und bevorzugt, jedoch nicht zwingend eben, also wölbungsfrei) ausgestaltet sind und mindestens eine dieser Komponenten so ausgebildet ist, dass sie ihre Form ändern kann. Eine solche Formänderung wird durch Verwendung eines elastischen (also dehnbaren) und/oder flexiblen (also biegsamen) Materials erlaubt. Somit ergeben sich die Kombinationsmöglichkeiten elastisch/steif, elastisch/elastisch, elastisch/flexibel und flexibel/flexibel. Selbstverständlich sind auch Materialien, welche flexibel und elastisch zugleich sind, verwendbar; diese werden definitionsgemäß zu den elastischen Materialien gezählt. Der erfindungsgemäße Werbeträger ist ferner dadurch gekennzeichnet, dass innere Vorderseite 5B und innere Rückseite 6B in ihren zu einer Längsachse L beabstandeten, beispielsweise parallelen Randbereichen miteinander verbundene Verbindungsbereiche 7A, 7B aufweisen (schraffiert dargestellt). Auf diese Weise ist in dem zwischen den Verbindungsbereichen 7A, 7B liegenden, unverbundenen Bereich 8 zwischen der inneren Vorderseite 5B und der inneren Rückseite 6B ein länglicher, am proximalen (zum Gelenk hin weisenden) Ende 3 und am distalen (zur Wischerarm-Spitze hin weisenden) Ende 4 ein offener Hohlraum 9 gebildet. Von diesem Hohlraum 9 ist ein Scheibenwischerarm (nicht gezeigt) aufnehmbar und durch diesen durchschiebbar. Der Hohlraum kann auch so groß sein, dass ein Scheibenwischerarm mit daran befestigtem Wischerblatt aufnehmbar bzw. durch ihn durchschiebbar ist.

Eine vorteilhafte Kombination der Materialien beider Seiten ist flexibel/flexibel, da diese besonders einfach herstell- und verbindbar ist. Eine andere vorteilhafte Kombination ist steif/dehnbar, da sich die dehnbare Seite, die bevorzugt die Rückseite ist, eng an den Scheibenwischerarm anlegt, was ein Rutschen oder Verdrehen verhindert und so eine besonders gute Haltefunktion bereitstellt.

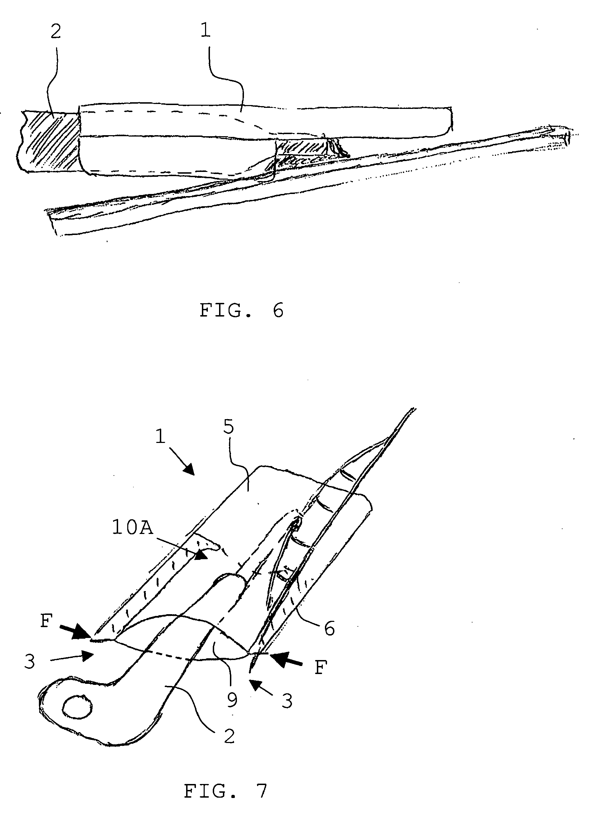

Erfindungsgemäß ermöglicht dies, dass der zunächst linienförmige Querschnitt des Hohlraums 9 durch Aufbringen von externen Kräften F zumindest im Bereich des proximalen Endes 3 derart verformbar ist, dass er eine Form aufweist, in welcher der Querschnitt des Scheibenwischerarms 2 aufnehmbar ist, so dass der Werbeträger 1 zwecks sicherer und ausschließlicher Befestigung am Scheibenwischerarm 2 auf denselben, nicht jedoch, wie auch aus Fig. 6 und **Fig. 7** ersichtlich, auch auf das Wischerblatt aufschiebbar ist. Dabei ist die Länge des Hohlraums 9 derart bemessen, dass der Scheibenwischerarm 2 durch den Hohlraum 9 durchschiebbar ist.

Die **Fig. 2** zeigt die Vorderseite' 5, und die Fig. 3 die Rückseite 6 als Halbzeuge eines erfindungsgemäßen Werbeträgers. Demnach können diese Komponenten einzeln vorliegen und beispielsweise aus Kunststofffolien ausgeschnitten oder ausgestanzt werden.

Bevorzugt bestehen Vorderseite 5 und Rückseite 6 aus einem flexiblen Material wie z.B. (im wesentlichen nicht-elastischem) Kunststoff, Karton, oder Verbundmaterial daraus. Die Stärke beträgt bevorzugt 0,6 mm vorn und 0,2 mm hinten. Ferner sollte zumindest das Material der Vorderseite 5 bedruckbar und/oder beklebbar sein.

Die Verbindungsbereiche 7A, 7B, die besonders gut in der Draufsicht nach **Fig. 4** zu erkennen sind, können flächen-, naht-, punkt- und/oder falzförmig ausgestaltet sein. Die Verbindungsbereiche der gezeigten Ausführungsform sind flächig ausgestaltet (schraffierte Bereiche). Nahtförmige Bereiche weisen eine linienartige Geometrie auf, wobei die Linien gerade oder kurvenförmig sein können. Punktförmige Bereiche weisen ein Einzahl nur eine geringe, in Mehrzahl jedoch eine erhöhte Haltekraft auf. Falzförmige Bereiche erstrecken sich im Wesentlichen nur entlang der Kanten. Sie können auch dadurch gebildet sein, dass Vorder- und Rückseite einstückig gebildet sind, wobei die innere Vorderseite 5B und die innere Rückseite 6B durch Knicken aneinander gebracht werden. Auf diese Weise ist einer der beiden Verbindungsbereiche falzförmig ausgebildet, und der andere kann beispielsweise naht- oder flächenförmig ausgebildet sein.

Es sei angemerkt, dass die Verbindungsbereiche 7A, 7B nicht zwangsläufig genau an den seitlichen Außenkanten der Vorderseite 5 und/oder der Rückseite 6 liegen müssen, sondern erfindungsgemäß an beliebiger Stelle in den Randbereichen liegen können. Letztere wiederum erstrecken sich von einer Linie, die zur Längsachse beabstandet ist, bis hin zu den seitlichen Außenkanten der Vorder- und Rückseite. Es ist demnach möglich, Verbindungsbereiche vorzusehen, welche (zur Schaffung des Hohlraumes nicht nur zueinander, sondern auch) zu den seitlichen Außenkanten der Vorder- und der Rückseite beabstandet sind, so dass sich zwischen den Außenseiten der Verbindungsbereiche und den seitlichen Außenkanten der Vorder- und Rückseite weitere unverbundene Bereiche (nicht gezeigt) existieren.

Auch umfasst die Erfindung Fälle, in denen eine Seite, beispielsweise die Vorderseite, breiter ist als die andere Seite, beispielsweise die Rückseite. In diesen Fällen reicht der Verbindungsbereich in Bezug auf die eine Seite bis an deren seitliche Außenkante heran, in Bezug auf die andere Seite hingegen nicht, da diese einen entsprechenden Überstand aufweist.

Es ist auch klar, dass nur solche Bereiche Verbindungsbereiche sein können, in denen sich Vorder- und Rückseite überlappen, wobei teilflächige Aussparungen unproblematisch sind.

Als Verbindungstechniken kommen insbesondere klebe- und Schweißtechniken sowie Nieten und das so genannten "Blistern" (gemeinsames Warmverformen) in Betracht. Selbstverständlich sind die Techniken je nach Bedarf auch miteinander kombinierbar.

Nach einer bevorzugten Ausführungsform ist die Rückseite 6 vollflächig ausgestaltet. Eine derartige Herstellung ist besonders einfach und somit kostengünstig.

Nach einer anderen, nicht dargestellten Ausführungsform ist die Rückseite 6 teilflächig und/oder unterbrochen ausgestaltet. Demnach kann die Rückseite 6 beispielsweise die Form mehrerer Bänder haben oder andere Aussparungen aufweisen, beispielsweise um Gewicht, Material und somit ebenfalls Kosten einzusparen. Da die Rückseite nicht als Werbefläche vorgesehen ist, ist eine derartig verringerte Oberfläche unproblematisch. Trotz der sich aus den Aussparungen des Hohlraums 9 ergebenden Unterbrechungen bleibt der Hohlraum 9 funktionell als solcher erhalten.

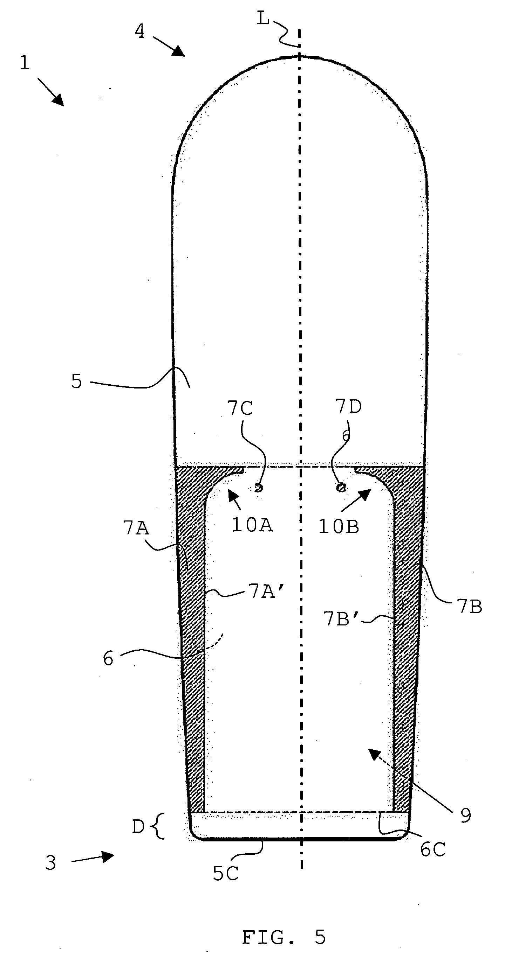

Nach einer bevorzugten Ausführungsform weisen die am proximalen Ende 3 liegenden Kanten 5C, 6C der Vorderseite 5 und Rückseite 6 einen Abstand D von wenigstens 0,1 und höchstens 3, sowie bevorzugt einem Zentimeter auf (s. Fig. 5). In den vorhergehenden Fig. 1-4 verlaufen diese Kanten in einer Draufsicht praktisch kollinear, weswegen D=0 und das Bezugszeichen nicht gezeigt ist.

Bevorzugt verlaufen die Kanten 5C, 6C wie gezeigt parallel, und die Rückseite 6 weist eine Länge 6L auf, die vorzugsweise zwischen 40% und 60% der Länge 5L der Vorderseite 5 beträgt. Mit anderen Worten, die Rückseite 6 ist in etwa halb so lang wie die Vorderseite 6. Auf diese Weise ist ein guter Kompromiss zwischen Materialverbrauch und Sicherheit beim Befestigen gegeben.

Eine besonders bevorzugte (Außen-)Geometrie des Werbeträgers 1 ist in der **Fig. 5** gezeigt. Demnach verbreitert sich dieser in einer Draufsicht auf Vorderseite 5 (oder Rückseite 6) vom proximalen Ende 3 zum distalen Ende 4 hin um 2% bis 20% und ist am distalen Ende 4 abgerundet. Die Abrundung betrifft vorliegend nur die Vorderseite 5, da sich die Rückseite 6 nicht ausreichend weit in distaler Richtung erstreckt. Diese Geometrie eignet sich besonders zur Anbringung von stehenden Figuren als Werbebotschaft, welche typischerweise im oberen Drittel eine etwas erhöhte Breite aufweisen.

Eine weitere, besonders bevorzugte (Innen-)Geometrie des Werbeträgers 1 weist zwei (wie gezeigt bevorzugt symmetrisch zur Längsachse L angeordnete) Verbindungsbereiche 7A, 7B auf, von denen mindestens einer eine Innenkante 7A', 7B' hat, welche vom proximalen Ende 3 in Richtung des distalen Endes 4 parallel zur Längsachse L verläuft und an ihrem distalen Ende einen der Längsachse L angenäherten (und wie gezeigt bevorzugt bogenförmigen) Abschnitt 10A, 10B aufweist, so dass sich eine Verjüngung des Hohlraums 9 ergibt. Bevorzugt weisen, wie dargestellt, beide Verbindungsbereiche 7A, 7B die beschriebene Verjüngung auf.

Eine derartige Form ist besonders gut dazu geeignet, eine definierte Aufsteckposition bereitzustellen. Da Scheibenwischerarme typischerweise in distaler Richtung schmäler werden und/oder entsprechende Absätze aufweisen, kann die beschriebene Verjüngung bei entsprechend gewählten Maßen ein Weiterschieben des Werbeträgers auf einen Scheibenwischerarm verhindern.

Nach einer weiteren, besonders bevorzugten Ausführungsform weist der Werbeträger 1 mindestens einen (und bevorzugt, wie gezeigt zwei) Zusatz-Verbindungsbereiche 7C, 7D auf. Die Verbindungsbereiche 7C, 7D sind zwischen den in den Randbereichen befindlichen Verbindungsbereichen 7A, 7B angeordnet und weisen im Vergleich zu diesen eine Verbindungsbereichen 7A, 7B aufgrund einer kleineren Fläche und/oder kleineren Haltekraft eine signifikant, beispielsweise um mindestens 30%, bevorzugt 50% und besonders bevorzugt 80% verringerte Verbindungsfestigkeit auf.

Aufgrund der verringerten Verbindungsfestigkeit lassen sich diese Zusatz-Verbindungsbereiche 7C, 7D bei Bedarf ablösen, ohne die (Haupt-)Verbindungsbereiche 7A, 7B ebenfalls abzulösen. Zum Ablösen wird vorzugsweise auch kein Werkzeug (oder lediglich ein einfaches Messer oder dergleichen) benötigt, da die verringerten Verbindungskräfte manuell bereitgestellt werden können.

Auf diese Weise ist der Hohlraum 9 noch besser an verschiedenste Geometrien von Scheibenwischerarmen anpassbar, ohne dass hierzu verschiedene Ausführungsformen von Innengeometrien (und somit Ausführungsformen des Werbeträgers 1) nötig wären.

Nachfolgend wird die Verwendung eines Werbeträgers 1 für Kraftfahrzeuge mit einem proximalen Ende 3 und einem distalen Ende 4, sowie mit einer Vorderseite 5 und einer Rückseite 6, von denen mindestens eine elastisch oder jede flexibel ausgebildet ist, und mit einem dazwischen liegenden, länglichen, am proximalen Ende 3 und am distalen Ende 4 offenen Hohlraum 9 beschrieben. Bevorzugt wird dazu ein Werbeträger 1 der vorstehend beschriebenen Art verwendet, weshalb auf eine Wiederholung der geometrischen Merkmale verzichtet wird.

Zur sicheren und ausschließlichen Befestigung eines Webeträgers 1 an einem in **Fig. 6** und **Fig. 7** gezeigten Scheibenwischerarm 2 auch während des Betriebs desselben werden erfindungsgemäß folgende Schritte durchgeführt:
- Bereitstellen des Werbeträgers 1;
- Verformen zumindest des proximalen Endes 3 des Werbeträgers 1 unter Aufbringung von externen Kräften F, so dass zumindest im Bereich des proximalen Endes 3 der (nicht gezeigte) zuvor linienförmige Querschnitt des Hohlraums 9 eine Form aufweist, in welcher der Querschnitt des Scheibenwischerarms 2 aufnehmbar ist;
- Aufschieben des proximalen Endes 3 des Werbeträgers 1 auf den Scheibenwischerarm 2;
- Durchschieben des Scheibenwischerarms 2 durch den Hohlraum 9.

Dabei werden wobei frühestens nach dem Aufschieben des proximalen Endes 3 des Werbeträgers 1 auf den Scheibenwischerarm 2 die externen Kräfte F zurückgenommen. Die externen Kräfte F können selbstverständlich auch erst dann zurückgenommen werden, wenn der Scheibenwischerarm 2 teilweise oder vollständig durch den Hohlraum 9 geschoben wurde, oder wenn der Werbeträger 1 an einer Aufsteckposition angelangt ist. Diese befindet sich bei dem in Fig. 7 gezeigten Werbeträger 1 im Abschnitt 10A, 10B (Bezugszeichen 10B in Fig. 7 weggelassen).

Es ist klar, dass vor dem Aufschieben des Werbeträgers 1 auf den Scheibenwischerarm 2 ein typischerweise am Scheibenwischerarm 2 befestigtes Wischerblatt (s. Fig. 6 und Fig. 7) abgenommen und/oder nach dem Durchschieben des Scheibenwischerarms 2 durch den Hohlraum 9 des Werbeträgers 1 wieder am Scheibenwischerarm 2 befestigt wird. Dies ist nicht nötig, wenn der Hohlraum 9 eine ausreichende Größe auch für das Durchschieben des montierten Scheibenwischers bietet. Es ist jedoch auch klar, dass höchste Sicherheit gegen einen unbeabsichtigten Verlust des Werbeträgers, beispielsweise durch Fahrtwind, nur dadurch gewährleistet ist, dass der Hohlraum 9 den Scheibenwischerarm 2, nicht jedoch auch das Wischerblatt aufnehmen kann. Das Wischerblatt dient dann als Sicherung gegen unbeabsichtigten Verlust des Werbeträgers.

Es ist auch klar, dass die Vorderseite 5 derart angebracht werden muss, dass sie im Betrieb einem Betrachter zugewandt ist. Je nach Geometrie und Materialwahl (Flexibilität/Elastizität) des Werbeträgers kann derselbe auch ohne Entfernen vom Scheibenwischerarm 2 auf diesem drehbar sein, so dass wahlweise auch seine Rückseite 6 einem Betrachter zugewandt ist. Hierfür ist es vorteilhaft, wenn die Rückseite 6 in etwa die Länge der Vorderseite 5 aufweist, so dass eine entsprechend große Fläche für die Werbebotschaft bereitgestellt ist. Alternativ kann ein Teil der Werbebotschaft auf der inneren Vorderseite (in Fig. 7 ohne Bezugszeichen) angebracht sein, und ein weiterer Teil auf der äußeren Rückseite (ebenfalls in Fig. 7 ohne Bezugszeichen). Auf diese Weise kann auch bewusst ein Tiefeneffekt (3D-Effekt) erzielbar sein, der mit herkömmlichen Werbeträgern nicht erzielbar ist.

Bevorzugt sind die externen Kräfte F, wie in der Fig. 7 dargestellt, Druckkräfte, welche auf die (seitlichen) Außenkanten des Werbeträgers 1 aufgebracht werden. Alternativ oder zusätzlich sind die externen Kräfte F Zugkräfte (nicht gezeigt), welche auf die Außenflächen, also die äußere Vorderseite 5A und die äußere Rückseite 6A des Werbeträgers 1, aufgebracht werden. Hierzu können Schlaufen oder kleine Öffnungen in einer der oder in beiden Seiten vorgesehen sein. Im Normalfall wird ein Eingriff in den Bereich des proximalen Endes 3 des Hohlraums 9 jedoch ausreichend sein, um denselben auseinander zu ziehen.

Sofern der Werbeträger 1 mindestens einen Zusatz-Verbindungsbereich 7C, 7D aufweist (s. Fig. 5), welcher den Hohlraum 9 verkleinert, indem er zwischen in den Randbereichen befindlichen Verbindungsbereichen 7A, 7B angeordnet ist, ist es bei Bedarf möglich, dass der mindestens eine Zusatz-Verbindungsbereich 7C, 7D während des Durchschiebens des Scheibenwischerarms 2 durch den Hohlraum 9 zertrennt und der Hohlraum 9 somit vergrößert wird. Auf diese Weise kann, wie bereits weiter oben beschrieben, eine größere Geometrievielfalt unterschiedlichster Scheibenwischerarme abgedeckt werden, ohne verschiedenartige Ausführungsformen des Werbeträgers 1 bereitstellen zu müssen.

Für den Fall, dass die Verbindungsfestigkeit des mindestens einen Zusatz-Verbindungsbereichs 7C, 7D zu hoch für ein manuelles Zertrennen im Wege des Durchschiebens des Scheibenwischerarms ist, kann das Zertrennen auch durch ein Werkzeug (z.B. Messer) erfolgen.

Bevorzugt weist der Zusatz-Verbindungsbereich 7C, 7D im Vergleich zu den Verbindungsbereichen 7A, 7B eine signifikant, beispielsweise um mindestens 30%, bevorzugt 50% und besonders bevorzugt 80% verringerte Verbindungsfestigkeit auf. Somit ist einerseits eine ausreichende Festigkeit gegeben, solange ein Zertrennen nicht gewünscht ist, aber kein Werkzeug nötig, wenn ein Zertrennen durchgeführt werden soll.

Wie dargelegt, löst der erfindungsgemäße Werbeträger in wirkungsvoller Weise die Aufgabe der Erfindung und vermeidet die Nachteile des Standes der Technik. Insbesondere ist der Werbeträger leicht am Scheibenwischerarm anbringbar und ebenso leicht entfernbar. Er bietet höchste Sicherheit gegen Verlieren und ist zu geringen Kosten herstellbar. Außerdem ist er universell einsetzbar, d.h. von der genauen Geometrie des Scheibenwischerarms weitgehend unabhängig und an diese anpassbar.

### Bezugszeichenliste

- 1: Werbeträger
- 2: Scheibenwischerarm
- 3: proximales Ende
- 4: distales Ende
- 5: Vorderseite
- 5A: äußere Vorderseite
- 5B: innere Vorderseite
- 5C: am proximalen Ende liegende Kante der Vorderseite
- 5L: Länge der Vorderseite
- 6: Rückseite
- 6A: äußere Rückseite
- 6B: innere Rückseite
- 6C: am proximalen Ende liegende Kante der Rückseite
- 6L: Länge der Rückseite
- 7A, 7B: Verbindungsbereich
- 7A', 7B': Innenkante (des Verbindungsbereichs)
- 7C, 7D: Zusatz-Verbindungsbereiche
- 8: unverbundener Bereich
- 9: Hohlraum
- 10A, 10B: (der Längsachse angenäherter) Abschnitt

- L: Längsachse
- D: Abstand
- F: externe Kräfte

## Patentansprüche

1. Werbeträger (1) zur Befestigung an einem Scheibenwischerarm (2) für Kraftfahrzeuge auch während dessen Betriebs, umfassend
- ein proximales Ende (3) und ein distales Ende (4),
- eine Vorderseite (5) mit einer als Werbefläche ausgestalteten oder ausgestaltbaren äußeren Vorderseite (5A) und einer inneren Vorderseite (5B), und
- eine Rückseite (6) mit einer äußeren Rückseite (6A) und einer inneren Rückseite (6B),
**dadurch gekennzeichnet, dass** Vorderseite (5) und Rückseite (6) flächig ausgestaltet sind und entweder eine dieser Komponenten (5; 6) elastisch und die andere steif, elastisch oder flexibel ausgebildet ist, oder beide dieser Komponenten flexibel ausgebildet sind, und dass innere Vorderseite (5B) und innere Rückseite (6B) in ihren zu einer Längsachse (L) beabstandeten Randbereichen miteinander verbundene Verbindungsbereiche (7A, 7B) aufweisen, so dass in dem zwischen den Verbindungsbereichen (7A, 7B) liegenden, unverbundenen Bereich (8) zwischen der inneren Vorderseite (5B) und der inneren Rückseite (6B) ein länglicher, am proximalen Ende (3) und am distalen Ende (4) offener Hohlraum (9) gebildet ist, dessen zunächst linienförmiger Querschnitt durch Aufbringen von externen Kräften (F) zumindest im Bereich des proximalen Endes (3) derart verformbar ist, dass er eine Form aufweist, in welcher der Querschnitt des Scheibenwischerarms (2) aufnehmbar ist, so dass der Werbeträger (1) zwecks sicherer und ausschließlicher Befestigung am Scheibenwischerarm (2) auf denselben, nicht jedoch auch auf das Wischerblatt aufschiebbar ist, wobei die Länge des Hohlraums (9) derart bemessen ist, dass der Scheibenwischerarm (2) durch den Hohlraum (9) durchschiebbar ist.

2. Werbeträger (1) nach Anspruch 1, wobei Vorderseite (5) und Rückseite (6) aus einem flexiblen Material bestehen.

3. Werbeträger nach Anspruch 1 oder 2, wobei die Verbindungsbereiche (7A, 7B) flächen-, naht-, punkt- und/oder falzförmig ausgestaltet sind.

4. Werbeträger (1) nach einem der Ansprüche 1 bis 3, wobei die Rückseite (6) vollflächig ausgestaltet ist.

5. Werbeträger (1) nach einem der Ansprüche 1 bis 3, wobei die Rückseite (6) teilflächig und/oder unterbrochen ausgestaltet ist.

6. Werbeträger (1) nach einem der vorhergehenden Ansprüche, wobei die am proximalen Ende (3) liegenden Kanten (5C, 6C) der Vorderseite (5) und Rückseite (6) einen Abstand (D) von wenigstens 0,1 und höchstens 3 Zentimetern aufweisen, und/oder die Rückseite (6) eine Länge (6L) aufweist, die zwischen 40% und 60% der Länge (5L) der Vorderseite (5) beträgt.

7. Werbeträger (1) nach Anspruch 6, wobei sich dieser in einer Draufsicht auf Vorderseite (5) oder Rückseite (6) vom proximalen Ende (3) zum distalen Ende (4) hin um 2% bis 20% verbreitert und/oder am distalen Ende (4) abgerundet ist.

8. Werbeträger (1) nach einem der vorhergehenden Ansprüche, wobei derselbe zwei zur Längsachse (L) angeordnete Verbindungsbereiche (7A, 7B) aufweist, von denen mindestens einer eine Innenkante (7A'; 7B') hat, welche vom proximalen Ende (3) in Richtung des distalen Endes (4) parallel zur Längsachse (L) verläuft und/oder an ihrem distalen Ende einen der Längsachse (L) angenäherten Abschnitt (10A; 10B) aufweist.

9. Werbeträger (1) nach einem der vorhergehenden Ansprüche, wobei derselbe mindestens einen Zusatz-Verbindungsbereich (7C; 7D) aufweist, welcher zwischen den in den Randbereichen befindlichen Verbindungsbereichen (7A, 7B) angeordnet ist und welcher im Vergleich zu ihnen eine verringerte Verbindungsfestigkeit aufweist

10. Verwendung eines Werbeträgers nach Anspruch 1 (1) für Kraftfahrzeuge mit einem proximalen Ende (3) und einem distalen Ende (4), sowie mit einer Vorderseite (5) und einer Rückseite (6), von denen mindestens eine elastisch ausgebildet ist, und mit einem dazwischen liegenden, länglichen, am proximalen Ende (3) und am distalen Ende (4) offenen Hohlraum (9), wobei zur sicheren und ausschließlichen Befestigung an einem Scheibenwischerarm auch während des Betriebs desselben (2) folgende Schritte durchgeführt werden:
- Bereitstellen des Werbeträgers (1);
- Verformen zumindest des proximalen Endes (3) des Werbeträgers (1) unter Aufbringung von externen Kräften (F), so dass zumindest im Bereich des proximalen Endes (3) der zuvor linienförmige Querschnitt des Hohlraums (9) eine Form aufweist, in welcher der Querschnitt des Scheibenwischerarms (2) aufnehmbar ist;
- Aufschieben des proximalen Endes (3) des Werbeträgers (1) auf den Scheibenwischerarm (2);
- Durchschieben des Scheibenwischerarms (2) durch den Hohlraum (9);
wobei frühestens nach dem Aufschieben des proximalen Endes (3) des Werbeträgers (1) auf den Scheibenwischerarm (2) die externen Kräfte (F) zurückgenommen werden, und wobei vor dem Aufschieben des Werbeträgers (1) auf den Scheibenwischerarm (2) ein am Scheibenwischerarm (2) befestigtes Wischerblatt abgenommen und nach dem Durchschieben des Scheibenwischerarms (2) durch den Hohlraum (9) des Werbeträgers (1) wieder am Scheibenwischerarm (2) befestigt wird.

11. Verwendung nach Anspruch 10, wobei die externen Kräfte (F) Druckkräfte sind, welche auf die Außenkanten des Werbeträgers (1) aufgebracht werden, und/oder Zugkräfte sind, welche auf die Außenflächen des Werbeträgers (1) aufgebracht werden.

12. Verwendung nach Anspruch 10 oder 11, wobei der Werbeträger (1) mindestens einen Zusatz-Verbindungsbereich (7C; 7D) aufweist, welcher den Hohlraum (9) verkleinert, indem er zwischen in den Randbereichen befindlichen Verbindungsbereichen (7A, 7B) angeordnet ist, so dass der mindestens eine Zusatz-Verbindungsbereich (7C; 7D) während des Durchschiebens des Scheibenwischerarms (2) durch den Hohlraum (9) zertrennt und der Hohlraum (9) somit vergrößert wird.

## Claims

1. Advertising medium (1) for attachment to a wiper arm (2) for power-driven vehicles even during its operation, comprising
- a proximal end (3) and a distal end (4),
- a front side (5) with an outer front side (5A) which is designed or designable as advertising space, and an inner front side (5B),
- a rear side (6) with an outer rear side (6A) and an inner rear side (6B),
**characterized in that** front side (5) and rear side (6) are designed as planes, and **in that**, either, one of these components (5; 6) is designed being elastically and the other is designed being stiff, elastically or flexible, or both of these components are designed being flexible, and **in that** inner front side (5B) and inner rear side (6B) have border regions, these border regions being spaced apart from each other with respect to a longitudinal axis (L) and having connection areas (7A, 7B) which are connected to each other, so that in the unconnected region (8) which lies between the connection areas (7A, 7B), an oblong hollow space (9) is formed between the inner front side (5B) and the inner rear side (6B), being open at the proximal end (3) and the distal end (4), wherein, by way of exposure to external forces (F), its initially line shaped cross section can be deformed at least in the region of the proximal end (3) in such a way that it has a shape in which the cross section of the wiper arm (2) can be received, so that, for a secure and exclusive attachment to the wiper arm (2), the advertising medium (1) can be slid onto the wiper arm (2), but not onto the wiper blade, wherein the length of the hollow space (9) is dimensioned such that the wiper arm (2) can be pushed through the hollow space (9).

2. Advertising medium (1) according to claim 1, wherein front side (5) and rear side (6) consist of a flexible material.

3. Advertising medium (1) according to claim 1 or 2, wherein the connection areas (7A, 7B) are designed in the shape of planes, seams, points, and/or folds.

4. Advertising medium (1) according to any of claims 1 to 3, wherein the rear side (6) is designed full-faced.

5. Advertising medium (1) according to any of claims 1 to 3, wherein the rear side (6) is designed partial-faced and/or discontinuous.

6. Advertising medium (1) according to any of the preceding claims, wherein the front sides' (5) and the rear sides' (6) edges (5C, 6C) which are located at the proximal end (3) have a distance (D) of at least 0.1 and not more than 3 centimetres, and/or wherein the rear side (6) has a length (6L) that amounts between 40% and 60% of the length (5L) of the front side (5).

7. Advertising medium (1) according to claim 6, wherein, in a top view onto the front side (5) or rear side (6), the advertising medium (1) broadens from the proximal end (3) to the distal end (4) by 2% to 20%, and/or wherein it is rounded at the distal end (4).

8. Advertising medium (1) according to any of the preceding claims, wherein the same has two connection areas (7A, 7B) arranged with respect to the longitudinal axis (L), at least one of them having an inner edge (7A'; 7B') which runs parallel to the longitudinal axis (L) from the proximal end (4) in direction of the distal end (4), and/or which has at its distal end a section (10A; 10B) that is approximated to the longitudinal axis (L).

9. Advertising medium (1) according to any of the preceding claims, wherein the same has at least one additional connection area (7C; 7D) which is located between the connection areas (7A, 7B) that are arranged in the border regions, and which has a reduced joint strength with respect to the connection areas (7A, 7B).

10. Use of an advertising medium (1) for power-driven vehicles, with a proximal end (3) and a distal end (4), as well as with a front side (5) and a rear side (6) of which at least one being designed elastically, and with an oblong hollow space (9) located in between that is open at the proximal end (3) and at the distal end (4), wherein, for the secure and exclusive attachment to a wiper arm (2) even during its operation, the following steps are performed:
- provision of the advertising medium (1);
- deforming at least the proximal end (3) of the advertising medium (1) by way of exposure to external forces (F), so that at least in the region of the proximal end (3) the initially line shaped cross section of the hollow space (9) has a shape in which the cross section of the wiper arm (2) can be received;
- sliding the proximal end (3) of the advertising medium (1) onto the wiper arm (2);
- pushing the wiper arm (2) through the hollow space (9); wherein at the earliest after pushing the proximal end (3) of the advertising medium (1) onto the wiper arm (2), the external forces (F) are withdrawn, and wherein, prior to pushing the advertising medium (1) onto the wiper arm (2), a wiper blade which is attached to the wiper arm (2) is detached, and then reattached to the wiper arm (2) after pushing the wiper arm (2) through the hollow space (2) of the advertising medium (1).

11. Use according to claim 10, wherein the external forces (F) are compressing forces which are applied to the outer edges of the advertising medium (1), and/or which are tensile forces which are applied to the outer surfaces of the advertising medium (1).

12. Use according to claim 10 or 11, wherein the advertising medium (1) has at least one additional connection area (7C; 7D) which downsizes the hollow space (9) by being arranged between connection areas (7A, 7B) that are located in the border regions, so that during pushing the wiper arm (2) through the hollow space (9), the at least one additional connection area (7C; 7D) is separated, thus enlarging the hollow space (9).

## Revendications

1. Support publicitaire (1) destiné à être fixé à un bras d'essuie-glace (2) pour automobiles, également pendant le fonctionnement de celui-ci, comprenant :
- une extrémité proximale (3) et une extrémité distale (4),
- une face avant (5) comportant une face avant extérieure (5A) et une face avant intérieure (5B) conçues ou pouvant être conçues comme une surface publicitaire, et
- une face arrière (6) avec une face arrière extérieure (6A) et une face arrière intérieure (6B),
**caractérisé en ce que** la face avant (5) et la face arrière (6) sont conçues plates et soit un de ces composants (5 ; 6) est réalisé élastique et l'autre est réalisé rigide, élastique ou souple, soit les deux de ces composants sont réalisés souples, et que la face avant intérieure (5B) et la face arrière intérieure (6B) présentent, dans leurs zones périphériques situées à distance d'un axe longitudinal (L), des zones de liaison (7A, 7B) reliées entre elles, de telle manière qu'un espace creux (9) longitudinal ouvert au niveau de l'extrémité proximale (3) et de l'extrémité distale (4) est formé, dans la zone (8) non assemblée située entre les zones de liaison (7A, 7B), entre la face avant intérieure (5B) et la face arrière intérieure (6B), dont la section transversale initialement linéaire est déformable par l'exercice de forces externes (F) au moins au niveau de l'extrémité proximale (3) de telle manière qu'il présente une forme dans laquelle la section transversale du bras d'essuie-glace (2) peut être logée, de telle manière que le support publicitaire (1) peut être glissé sur le bras d'essuie-glace (2) pour y assurer une fixation sûre et exclusive, mais pas sur le balai d'essuie-glace, la longueur de l'espace creux (9) étant dimensionnée de telle manière que le bras d'essuie-glace (2) peut être coulissé à travers l'espace creux (9).

2. Support publicitaire (1) selon la revendication 1, dans lequel la face avant (5) et la face arrière (6) sont constituées d'un matériau souple.

3. Support publicitaire selon la revendication 1 ou 2, dans lequel les zones de liaison (7A, 7B) sont réalisées sous forme de surfaces, de coutures, de points et/ou de plis.

4. Support publicitaire (1) selon l'une des revendications 1 à 3, dans lequel la face arrière (6) est conçue sous forme de surface en plein.

5. Support publicitaire (1) selon l'une des revendications 1 à 3, dans lequel la face arrière (6) est conçue sous forme de surface partielle et/ou interrompue.

6. Support publicitaire (1) selon l'une des revendications précédentes, dans lequel les bords (5C, 6C) de la face avant (5) et de la face arrière (6) situés au niveau de l'extrémité proximale (3) présentent une distance (D) d'au moins 0,1 et d'au plus 3 centimètres, et/ou la face arrière (6) présente une longueur (6L) qui est comprise entre 40 % et 60 % de la longueur (5L) de la face avant (5).

7. Support publicitaire (1) selon la revendication 6, dans lequel celui-ci s'élargisse de 2 % à 20 %, dans une vue de dessus sur la face avant (5) ou la face arrière (6), depuis l'extrémité proximale (3) jusqu'à l'extrémité distale (4) et/ou est arrondi au niveau de l'extrémité distale (4).

8. Support publicitaire (1) selon l'une des revendications précédentes, dans lequel celui-ci présente deux zones de liaison (7A, 7B) disposées vers l'axe longitudinal (L), dont au moins une a un bord intérieur (7A' ; 7B') qui s'étend depuis l'extrémité proximale (3) parallèlement à l'axe longitudinal (L) en direction de l'extrémité distale (4) et/ou présente au niveau de son extrémité distale une portion (10A ; 10B) rapprochée de l'axe longitudinal (L).

9. Support publicitaire (1) selon l'une des revendications précédentes, dans lequel celui-ci présente au moins une zone de liaison supplémentaire (7C ; 7D) qui est disposée entre les zones de liaison (7A, 7B) situées dans les zones marginales et qui présente une résistance de liaison réduite par rapport à celles-ci.

10. Utilisation d'un support publicitaire (1) pour automobiles comportant une extrémité proximale (3) et une extrémité distale (4), ainsi qu'une face avant (5) et une face arrière (6), dont au moins une est réalisée élastique, et comportant un espace creux (9) longitudinal intercalaire, ouvert au niveau de l'extrémité proximale (3) et de l'extrémité distale (4), dans laquelle les étapes suivantes sont effectuées pour assurer une fixation sûre et exclusive au bras d'essuie-glace également pendant le fonctionnement (2) de celui-ci :
- fourniture du support publicitaire (1) ;
- déformation d'au moins l'extrémité proximale (3) du support publicitaire (1) en exerçant des forces externes (F), de telle manière que la section transversale initialement linéaire de l'espace creux (9) présente au moins dans la zone de l'extrémité proximale (3) une forme dans laquelle la section transversale du bras d'essuie-glace (2) peut être logée ;
- glissement de l'extrémité proximale (3) du support publicitaire (1) sur le bras d'essuie-glace (2) ;
- coulissement du bras d'essuie-glace (2) à travers l'espace creux (9) ;
dans laquelle les forces externes (F) sont libérées au plus tôt après le glissement de l'extrémité proximale (3) du support publicitaire (1) sur le bras d'essuie-glace (2), et dans laquelle un balai d'essuie-glace fixé sur le bras d'essuie-glace (2) est retiré avant le glissement du support publicitaire (1) sur le bras d'essuie-glace (2) et refixé sur le bras d'essuie-glace (2) après le coulissement du bras d'essuie-glace (2) à travers l'espace creux (9) du support publicitaire (1).

11. Utilisation selon la revendication 10, dans laquelle les forces externes (F) sont des forces de compression qui sont exercées sur les bords extérieurs du support publicitaire (1), et/ou sont des forces de traction qui sont appliquées sur les surfaces extérieures du support publicitaire (1).

12. Utilisation selon la revendication 10 ou 11, dans laquelle le support publicitaire (1) présente au moins une zone de liaison supplémentaire (7C ; 7D) qui diminue l'espace creux (9) en étant disposée entre les zones de liaison (7A, 7B) situées dans les zones périphériques, de telle sorte que l'au moins une zone de liaison supplémentaire (7C ; 7D) est sectionnée pendant le coulissement du bras d'essuie-glace (2) à travers l'espace creux (9) et l'espace creux (9) se trouve ainsi agrandi.
